(19) Europäisches Patentamt
European Patent Office
Office européen des brevets

(11) **EP 2 796 836 B1**

(12) **EUROPEAN PATENT SPECIFICATION**

(45) Date of publication and mention
of the grant of the patent:
**10.01.2018 Bulletin 2018/02**

(51) Int Cl.:
***G01D 5/24*** *(2006.01)*

(21) Application number: **13164687.9**

(22) Date of filing: **22.04.2013**

(54) **Capacitive sensing arrangement and method for capacitive sensing**

Kapazitive Messanordnung und Verfahren zur kapazitiven Messung

Dispositif de détection capacitif et procédé pour la détection capacitive

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.10.2014 Bulletin 2014/44**

(73) Proprietor: **AMS AG
8141 Unterpremstätten (AT)**

(72) Inventor: **Christen, Thomas
8049 Zürich (CH)**

(74) Representative: **Epping - Hermann - Fischer
Patentanwaltsgesellschaft mbH
Schloßschmidstraße 5
80639 München (DE)**

(56) References cited:
**EP-A1- 2 428 774    DE-A1- 19 855 896**

EP 2 796 836 B1

**Description**

The invention relates to a capacitive sensing arrangement and to a method for capacitive sensing.

Capacitive sensors are employed in a wide variety of applications such as force sensing, pressure sensing, accelerometers, distance measurement or gyroscopes.

In a known implementation, as described e.g. in EP 2428774 A1, a capacitive sensor is provided in a capacitive push-pull half-bridge configuration with a charge amplifier connected to the sensor's single sensing terminal. The difference between a first and second capacitor of the half-bridge configuration is measured by applying a differential sensing reference voltage to the sensor. The employed amplifier typically is a differential input amplifier or instrumentation amplifier with its non-inverting input connected to a reference potential terminal to establish a virtual ground. The amplifier's inverting input is fed with the signal provided by the sensor. The noise at the output of the amplifier is consequently the sum of both, namely the noise of the non-inverting and of the inverting input of the charge amplifier. The current in the input branch of the non-inverting input's terminal, which is only used to obtain a virtual ground potential at the amplifier input, limits the achievable power efficiency.

DE 19855896 A1 shows a capacitance detector circuit.

It is therefore one objective of the present application to provide an improved arrangement and method for capacitive sensing.

The objective is achieved by the subject-matter of the independent patent claims. Embodiments and developments of the invention are defined in the dependent claims. According to the invention a capacitive sensing arrangement has a capacitive sensor for providing a sensor signal, and a charge amplifier circuit. The charge amplifier circuit comprises an input which is connected to the capacitive sensor, a single-input amplifier, means for providing a bias voltage and a feedback capacitor. The single-input amplifier has an amplifier input and an output to provide an output voltage as a function of the sensor signal. The single-input amplifier comprises a common-source transistor amplifier. The means for providing the bias voltage are coupled between the input and the amplifier input such that the bias voltage is subtracted from the sensor signal. The feedback capacitor is coupled between the output and the input. The capacitive sensing arrangement further comprises switching means which are adapted to operate the capacitive sensing arrangement in one of two phases. Thereby, in a reset phase the feedback capacitor is discharged and the bias voltage is refreshed. In a sensing phase a differential sensing reference voltage is supplied to the capacitive sensor and the output voltage is provided as a function of an amplification of the sensor signal.

The capacitive sensor provides the sensor signal. The bias voltage is provided in series to the amplifier input of the single-input amplifier such that the bias voltage is subtracted from the sensor signal thereby providing a virtual ground potential at the amplifier input. Consequently, the single input amplifier which otherwise cannot distinguish between an input signal and a reference potential is enabled to amplify the sensor signal as such.

By using the single input amplifier a reduction in noise and current consumption is achieved. In an exemplary implementation, the noise is improved by 3 dB.

The bias voltage can also be referred to as reference voltage. The bias voltage amounts to the reference voltage of the capacitive sensor and an input bias voltage of the single-input amplifier.

During the reset phase, the means for providing the bias voltage are recharged to the full level of the bias voltage such that in a subsequent sensing phase the full amount of the bias voltage is subtracted from the amplifier input such that the single-input amplifier merely works as a charge amplifier for the sensor signal.

In one embodiment the means for providing the bias voltage comprise a level-shift capacitor.

As the level-shift capacitor in each reset phase is charged to the bias voltage, it takes over the function of a battery for the bias voltage and consequently shifts the level of the sensor signal by the bias voltage.

In a further development the capacitive sensing arrangement comprises an additional capacitor which is coupled between the output and the amplifier input of the single input amplifier.

By way of the additional capacitor a value of the output voltage is kept at its level during the subsequent reset phase.

In a further embodiment the capacitive sensor comprises a serial connection of a first and a second capacitor. Therein a sense terminal is formed by a connection point between first and second capacitor. The sense terminal is coupled to the input of the charge amplifier circuit.

First and second capacitors of the capacitive sensor are used in a capacitive push-pull half bridge configuration.

In one development at least one of first and second capacitors is adapted to change its capacitance in response to a physically measurable value such as acceleration, pressure or distance.

At least one of the capacitors used in the capacitive sensor is modulated in response to a physically measurable value corresponding to the application in which the sensor is used as mentioned in the beginning. In this case, a reference capacitor is used to implement the second capacitor of the sensor.

In another embodiment the serial connection of the capacitive sensor has a positive node and a negative node for applying a differential sensing reference voltage.

The differential sensing reference voltage is applied during the sensing phase, whereas the bias voltage is supplied to the positive and negative node during the reset phase.

In a further development the sensor signal is provided at the sense terminal as a function of a charge difference between first and second capacitor.

In one embodiment the capacitive sensing arrangement is implemented in a monolithic manner on a single chip. Consequently, the capacitive sensor and the charge amplifier circuit are provided as a single chip solution. According to the invention a method for capacitive sensing comprises the following steps:

- providing a capacitive sensing arrangement as described above,
- in a reset phase discharging the feedback capacitor and refreshing the bias voltage of the charge amplifier circuit of the capacitive sensing arrangement,
- in a sensing phase supplying a differential sensing reference voltage to the capacitive sensor of the capacitive sensing arrangement, and providing the output voltage as a function of an amplification of the sensor signal provided by the capacitive sensor.

In one development refreshing the bias voltage is realized by charging a level-shift capacitor to the bias voltage.

In another embodiment the reset phase and sensing phase are alternatively repeated.

In a development the method further comprises the step of keeping constant the output voltage during the subsequent reset phase.

The text below explains the invention in detail using exemplary embodiments with reference to the drawings. Components and circuit elements that are functionally identical or have the identical effect bear identical reference numbers. In so far as circuit parts or components correspond to one another in function, a description of them will not be repeated in each of the following figures. Therein:

Figure 1 shows a first exemplary embodiment of a capacitive sensing arrangement according to the proposed principle,

Figure 2 shows timing signal diagrams for a capacitive sensing arrangement according to the proposed principle,

Figure 3 shows a second exemplary embodiment of a capacitive sensing arrangement according to the proposed principle,

Figure 4 shows a third exemplary embodiment of a capacitive sensing arrangement according to the proposed principle,

Figure 5 shows a first exemplary implementation of a single-input amplifier to be used in a capacitive sensing arrangement according to the proposed principle, and

Figure 6 shows a second exemplary implementation of a single-input amplifier to be used in a capacitive sensing arrangement according to the proposed principle.

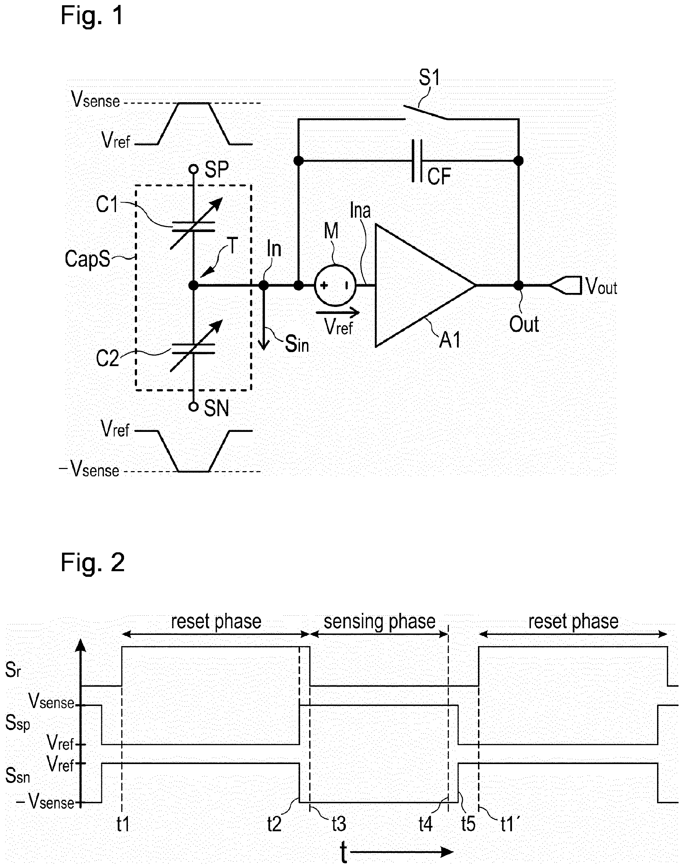

Figure 1 shows a first exemplary embodiment of a capacitive sensing arrangement according to the proposed principle. The arrangement comprises a capacitive sensor CapS and a charge amplifier circuit. The charge amplifier circuit has an input In, means M for providing a bias voltage Vref, a single-input amplifier A1, and a feedback capacitor CF. The single-input amplifier A1 has an amplifier input Ina and an output Out at which an output voltage Vout is provided. The means M for providing the bias voltage Vref are coupled between the input In of the charge amplifier circuit and the amplifier input Ina of the single-input amplifier A1. The feedback capacitor CF is connected between the input In of the charge amplifier circuit and the output Out of the single-input amplifier A1. Furthermore, switching means are provided in the form of a switch S1 which is coupled in parallel to the feedback capacitor CF between input In and output Out.

The capacitive sensor CapS comprises a first capacitor C1 and a second capacitor C2. In this example, both capacitors C1 and C2 are parameter modulated as indicated by the arrows. The capacitors C1 and C2 are provided in a half bridge configuration. A connection terminal of the serial connection of first and second capacitor C1, C2 forms a sense terminal T. The second terminal of the first capacitor C1 forms a positive node SP, whereas a second terminal of second capacitor C2 forms a negative node SN. At the sense terminal T a sensor signal Sin is provided.

During a reset phase, the switch S1 is closed so that the feedback capacitor CF is discharged. At the same time the bias voltage Vref on the means M for providing the bias voltage Vref is refreshed. The bias voltage Vref is also applied to the positive and the negative node SP, SN of the capacitive sensor CapS. First and second capacitors C1, C2 are discharged. The sense terminal T is at the level of the bias voltage Vref.

During a subsequent sensing phase, the switch S1 is opened and a differential sensing reference voltage Vsense is applied to the positive and negative node SP, SN. Particularly, a positive sensing reference voltage Vsense is supplied to the positive node SP, whereas a negative reference sensing voltage -Vsense of the same amount is applied to the negative node SN. The capacitive sensor consequently provides the sensor signal Sin to the input In of the charge amplifier circuit as a function of a charge difference between first and second capacitor C1-C2. The bias voltage Vref is subtracted from the sensor signal Sin and the resulting signal is amplified in the single-input amplifier A1. The output voltage Vout is obtained as

$$Vout = \frac{C1 - C2}{CF} * Vsense.$$

Therein Vout represents the output voltage Vout, C1 represents the capacitance of the first capacitor C1, C2 represents the capacitance of the second capacitor C2, CF represents the capacitance of the feedback capacitor CF and Vsense represents the differential sensing reference voltage Vsense.

Compared with a traditional charge amplifier using an instrumentation amplifier with a differential input the proposed capacitive sensing arrangement offers a reduction in noise of about 3 dB and a cut in power consumption by half due to the use of single-input amplifier A1. Advantageously, single-input amplifier A1 is independent of the exact value of the bias voltage Vref.

The dynamic behaviour of the capacitive sensing arrangement is described in more detail with reference to Figure 2.

Figure 2 shows timing signal diagrams for a capacitive sensing arrangement according to the proposed principle. The first line shows a course of a reset signal Sr which is used to operate the switching means of the capacitive sensing arrangement, e.g. switch S1 of Figure 1. The second line shows a course of a signal Ssp provided to the positive node SP of the capacitive sensor CapS of Figure 1. The third line shows a course of a signal Ssn applied to the negative node SN of the capacitive sensor CapS of Figure 1.

At a first point in time t1 a reset phase is initiated by setting the reset signal Sr such that the switch S1 is closed. At the same time, the bias voltage Vref is applied to positive and negative node SP, SN. At a second point in time t2 the positive sensing reference voltage Vsense is applied to the positive node SP, whereas the negative sensing reference voltage -Vsense is applied to the negative node SN. At a third point in time t3, the sensing phase starts by opening switch S1 via reset signal Sr. The capacitive sensing arrangement consequently amplifies the capacitive difference of first and second capacitor C1, C2 as in the equation above. At a fourth point in time t4, the value of the output voltage Vout is sampled by subsequent circuitry which evaluates the sensor results. At a fifth point in time t5, the bias voltage Vref is applied to positive node SP and negative node SN. The next reset phase starts at point in time t1'.

The reset phase between point in time t1 and t3 is used to refresh the bias voltage Vbias. It can also be used to apply feedback forces if the capacitive sensing arrangement is used in a closed loop system, i.e. the output Out is coupled back to the capacitive sensor CapS.

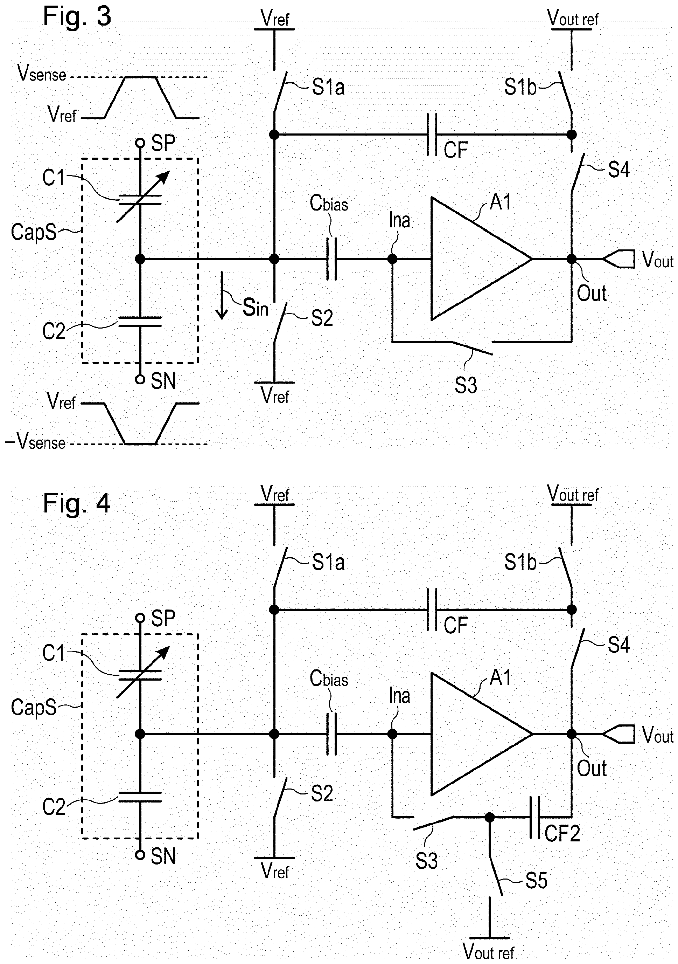

Figure 3 shows a second exemplary embodiment of a capacitive sensing arrangement according to the proposed principle. This embodiment is based on the embodiment of Figure 1 with an example realization of the means for providing the bias voltage and a detailed realization of the switching means. The means for providing the bias voltage Vref are implemented in the form of a level shift capacitor Cbias which is connected via a second switch S2 to a terminal which is supplied with the bias voltage Vref. The switching means here comprise switches S1a, S1b, S2, S3 and S4. Switches S1a, S1b, S2 and S3 are all operated by the reset signal Sr as depicted in Figure 2. Switch S4 is operated by the inverted reset signal Sr. Switch S1a connects one terminal of the feedback capacitor CF to the bias voltage Vref. Switch S1b connects the other terminal of the feedback capacitor CF to a reference output voltage Voutref which corresponds to a reference potential of the single-input amplifier's A1 output operating point. Switch S3 couples the single-input amplifier's A1 input Ina to its output Out. Switch S4 couples the output Out to the second terminal of the feedback capacitor CF. As a further difference to Figure 1, in this example the second capacitor C2 of the capacitive sensor CapS is realized as a reference capacitor. Only the first capacitor C1 is parameter modulated.

During the reset phase switches S1a, S1b, S2 and S3 are closed. Switch S4 is open. Consequently, the feedback capacitor CF is discharged. The level-shift capacitor Cbias is charged to the value of the bias voltage Vref.

During the subsequent sensing phase switches S1a, S1b, S2 and S3 are opened, whereas switch S4 is closed. As a result, the feedback capacitor CF is coupled in the feedback loop of the single-input amplifier A1. It is to be noted that single-input amplifier A1 does not work as an integrator. The level shift capacitor Cbias subtracts the bias voltage Vref from the sensor signal Sin so that the output voltage Vout reflects the capacitive difference between first and second capacitors C1, C2 relative to the capacitance of the feedback capacitor CF.

Figure 4 shows a third exemplary embodiment of a capacitive sensing arrangement according to the proposed principle. This example conforms to the one in Figure 3, the only differences being that the capacitive sensor CapS comprises first and second capacitors C1 and C2 which are both parameter modulated and that the charge amplifier circuit further comprises an additional capacitor CF2 and another switch S5. The additional capacitor CF2 is connected to the output Out of the single input amplifier A1. It is further connected via switch S3 to the amplifier input Ina and via switch S5 to the output reference voltage Voutref. Thereby, switch S5 is controlled like switch S4 with the inverted reset signal Sr. Consequently, during the reset phase switch S5 is open and switch S3 is closed so that the additional capacitor CF2 is coupled to the output Out and the input Ina of single-input amplifier A1. As a result, the last value of the output voltage Vout which was determined during the previous sensing phase is preserved at the output Out during the subsequent reset phase.

Settling requirements on the single-input amplifier A1 are thus reduced.

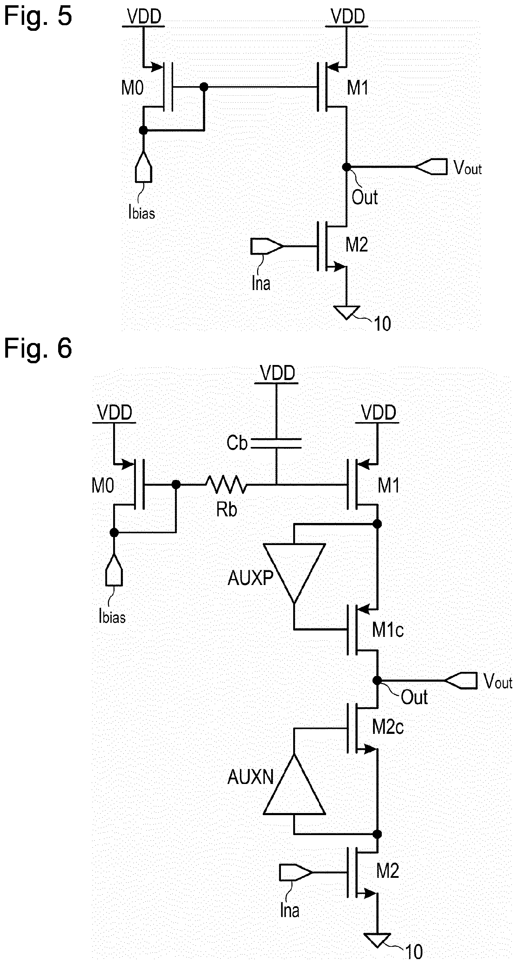

Figure 5 shows a first exemplary implementation of the single-input amplifier to be used in a capacitive sensing arrangement according to the proposed principle. Amplifier A1 of Figures 1, 3 or 4 thus can be realized by the circuit of Figure 5 which depicts a simple common source transistor amplifier. The amplifier comprises transistors M0, M1 and M2. Transistor M2 is used as the amplifying transistor with its gate terminal forming the amplifier input Ina and its drain terminal forming the output Out. The source terminal is referred to a reference potential terminal 10. Transistors M0 and M1 represent a current mirror for an internal supply current Ibias. An internal supply voltage VDD is supplied to the source terminals of transistors M0 and M1.

Figure 6 shows a second exemplary implementation of a single-input amplifier to be used in a capacitive sensing arrangement according to the proposed principle. The circuit in Figure 6 is based on the circuit in Figure 5, additionally having a noise filter Cb, Rb, additional cascode transistors M1c, M2c and additional auxiliary amplifiers AUXP, AUXN. The noise filter Rb, CB is coupled between gate terminals of transistors M0 and M1. In that way, the noise from the bias current Ibias is suppressed. Transistor M1c is connected as cascode to transistor M1, whereas transistor M2c is connected as cascode to transistor M2. By means of auxiliary regulating amplifiers AUXP, AUXN the gain of the respective cascode transistor M1c, M2c is increased.

Consequently, the DC gain is increased and the amplifier input Ina is isolated from the output Out. Furthermore, the power supply rejection ratio, PSRR, is boosted and is rendered independent of the internal supply voltage VDD.

The embodiments described above, in particular single features of these embodiments, can be combined in various ways.

Reference list

| | |
|---|---|
| CapS | capacitive sensor |
| Sin | sensor signal |
| Out | output |
| In, Ina | input |
| C1, C2, CF, CF2 | capacitor |
| VDD | supply voltage |
| SP, SN | node |
| M0, M1, M2, M1c, M2c | transistor |
| 10 | reference potential terminal |
| A1, AUXN, AUXP | amplifier |
| T | terminal |
| Vref | bias voltage |
| M | means |
| Vsense | sensing reference voltage |
| S1, S2, S3, S4, S5 | switch |
| Sr, Ssp, Ssn | signal |
| t1, t2, t3, t4, t5, t1' | point in time |
| Cbias | level shift capacitor |
| Voutref | output reference voltage |
| Ibias | supply current |
| Cb, Rb | filter |

**Claims**

1. Capacitive sensing arrangement having

- a capacitive sensor (CapS) for providing a sensor signal (Sin), and
- a charge amplifier circuit comprising

  - an input (In) which is connected to the capacitive sensor (CapS),
  - a single-input amplifier (A1) with an amplifier input (Ina) and an output (Out) to provide an output voltage (Vout) as a function of the sensor signal (Sin), the single-input amplifier (A1) comprising a common-source transistor amplifier,
  - means (M) for providing a bias voltage (Vref) coupled between the input (In) and the amplifier input (Ina) such that the bias voltage (Vref) is subtracted from the sensor signal (Sin), and
  - a feedback capacitor (CF) coupled between the output (Out) and the input (In),

  the arrangement further comprising switching means (S1, S2, S3, S4, S5) which are adapted to operate the capacitive sensing arrangement in one of two phases, wherein in a reset phase the feedback capacitor (CF) is discharged and the bias voltage (Vref) is refreshed, and wherein in a sensing phase a differential sensing reference voltage (Vsense) is supplied to the capacitive sensor (CapS), and the output voltage (Vout) is provided as a function of an amplification of the sensor signal (Sin).

2. Arrangement according to claim 1,
   wherein the means (M) for providing the bias voltage (Vref) comprise a level-shift capacitor (Cbias).

3. Arrangement according to any of claims 1 to 2,
   further comprising an additional capacitor (CF2) which is coupled between the output (Out) and the amplifier input (Ina) of the single-input amplifier (A1).

4. Arrangement according to any of claims 1 to 3,
   wherein the capacitive sensor (CapS) comprises a serial connection of a first and a second capacitor (C1, C2), wherein a sense terminal (T) is formed by a connection point between first and second capacitor (C1, C2) and wherein the sense terminal (T) is coupled to the input (In) of the charge amplifier circuit.

5. Arrangement according to claim 4,
   wherein at least one of first and second capacitor (C1, C2) is adapted to change its capacitance in response to a physically measurable value such as acceleration, pressure, distance.

6. Arrangement according to claim 4 or 5,
   wherein the serial connection has a positive node (SP) and a negative node (SN) for applying the differential sensing reference voltage (Vsense).

7. Arrangement according to any of claims 4 to 6,
   wherein the sensor signal (Sin) is provided at the sense terminal (T) as a function of a charge difference between first and second capacitor (C1, C2).

8. Arrangement according to any of claims 4 to 7,
   wherein the capacitive sensor (CapS) is operated in a half-bridge configuration.

9. Arrangement according to any of claims 1 to 8
   which is implemented in a monolithic manner on a single chip.

10. Method for capacitive sensing comprising the following steps:

    providing a capacitive sensing arrangement having

    - a capacitive sensor (CapS) for providing a sensor signal (Sin), and
    - a charge amplifier circuit comprising

      - an input (In) which is connected to the capacitive sensor (CapS),
      - a single-input amplifier (A1) with an amplifier input (Ina) and an output (Out) to provide an output voltage (Vout) as a function of the sensor signal (Sin), the single-input amplifier (A1) comprising a common-source transistor amplifier,

- means (M) for providing a bias voltage (Vref) coupled between the input (In) and the amplifier input (Ina) such that the bias voltage (Vref) is subtracted from the sensor signal (Sin), and
- a feedback capacitor (CF) coupled between the output (Out) and the input (In),

- the arrangement further comprising switching means (S1, S2, S3, S4, S5) which are adapted to operate the capacitive sensing arrangement in one of two phases such that,
- in a reset phase discharging the feedback capacitor (CF) and refreshing the bias voltage (Vref),
- in a sensing phase supplying a differential sensing reference voltage (Vsense) to the capacitive sensor (CapS), and providing the output voltage (Vout) as a function of an amplification of the sensor signal (Sin).

11. Method according to claim 10,
wherein refreshing the bias voltage (Vref) is realized by charging a level-shift capacitor (Cbias) to the bias voltage (Vref).

12. Method according to claim 10 or 11,
wherein reset phase and sensing phase are alternatively repeated.


**Patentansprüche**

1. Kapazitive Messanordnung mit

- einem kapazitiven Sensor (CapS) zum Bereitstellen eines Sensorsignals (Sin), und
- einer Ladungsverstärkerschaltung, die Folgendes umfasst:

- einen Eingang (In), der an den kapazitiven Sensor (CapS) angeschlossen ist,
- einen Einzeleingangsverstärker (A1) mit einem Verstärkereingang (Ina) und einem Ausgang (Out) zum Bereitstellen einer Ausgangsspannung (Vout) in Abhängigkeit des Sensorsignals (Sin), wobei der Einzeleingangsverstärker (A1) einen Transistorverstärker in common-source Schaltung umfasst,
- Mittel (M) zum Bereitstellen einer Vorspannung (Vref), die derart zwischen den Eingang (In) und den Verstärkereingang (Ina) geschaltet sind, dass die Vorspannung (Vref) vom Sensorsignal (Sin) subtrahiert wird, und
- einen Rückkopplungskondensator (CF), der zwischen den Ausgang (Out) und den Eingang (In) geschaltet ist,

wobei die Anordnung darüber hinaus Schaltmittel (S1, S2, S3, S4, S5) umfasst, die dazu angepasst sind, die kapazitive Messanordnung in einer von zwei Phasen zu betreiben,
wobei in einer Rücksetzphase der Rückkopplungskondensator (CF) entladen und die Vorspannung (Vref) aufgefrischt wird, und
wobei in einer Messphase eine differentielle Messreferenzspannung (Vsense) dem kapazitiven Sensor (CapS) zugeführt wird, und die Ausgangsspannung (Vout) in Abhängigkeit von einer Verstärkung des Sensorsignals (Sin) bereitgestellt wird.

2. Anordnung nach Anspruch 1,
wobei die Mittel (M) zum Bereitstellen der Vorspannung (Vref), einen Pegelverschiebungskondensator (Cbias) umfassen.

3. Anordnung nach einem der Ansprüche 1 bis 2,
darüber hinaus einen zusätzlichen Kondensator (CF2) umfassend, der zwischen den Ausgang (Out) und den Verstärkereingang (Ina) des Einzeleingangsverstärkers (A1) geschaltet ist.

4. Anordnung nach einem der Ansprüche 1 bis 3,
wobei der kapazitive Sensor (CapS) eine Reihenschaltung aus einem ersten und einem zweiten Kondensator (C1, C2) umfasst, wobei ein Messanschluss (T) durch einen Verbindungspunkt zwischen dem ersten und dem zweiten Kondensator (C1, C2) gebildet ist, und wobei der Messanschluss (T) mit dem Eingang (In) der Ladungsverstärkerschaltung verschaltet ist.

5. Anordnung nach Anspruch 4,

wobei der erste und/oder zweite Kondensator (C1, C2) dazu angepasst ist bzw. sind, seine/ihre Kapazität im Ansprechen auf einen physikalisch messbaren Wert wie etwa Beschleunigung, Druck, Entfernung zu ändern.

6. Anordnung nach Anspruch 4 oder 5, wobei die Reihenschaltung einen positiven Knoten (SP) und einen negativen Knoten (SN) hat, um die differentielle Messreferenzspannung (Vsense) anzulegen.

7. Anordnung nach einem der Ansprüche 4 bis 6, wobei das Sensorsignal (Sin) am Messanschluss (T) in Abhängigkeit einer Ladungsdifferenz zwischen dem ersten und zweiten Kondensator (C1, C2) bereitgestellt wird.

8. Anordnung nach einem der Ansprüche 4 bis 7, wobei der kapazitive Sensor (CapS) in einer Halbbrückenauslegung betrieben wird.

9. Anordnung nach einem der Ansprüche 1 bis 8, die auf eine monolithische Weise auf einem einzelnen Chip implementiert ist.

10. Verfahren zur kapazitiven Messung, die folgenden Schritte umfassend:

   Bereitstellen einer kapazitiven Messanordnung mit

   - einem kapazitiven Sensor (CapS) zum Bereitstellen eines Sensorsignals (Sin), und
   - einer Ladungsverstärkerschaltung, die Folgendes umfasst:

      - einen Eingang (In), der an den kapazitiven Sensor (CapS) angeschlossen ist,
      - einen Einzeleingangsverstärker (A1) mit einem Verstärkereingang (Ina) und einem Ausgang (Out) zum Bereitstellen einer Ausgangsspannung (Vout) in Abhängigkeit des Sensorsignals (Sin), wobei der Einzeleingangsverstärker (A1) einen Transistorverstärker in common-source Schaltung umfasst,
      - Mittel (M) zum Bereitstellen einer Vorspannung (Vref), die derart zwischen den Eingang (In) und den Verstärkereingang (Ina) geschaltet werden, dass die Vorspannung (Vref) vom Sensorsignal (Sin) subtrahiert wird, und
      - einen Rückkopplungskondensator (CF), der zwischen den Ausgang (Out) und den Eingang (In) geschaltet ist,

   - wobei die Anordnung darüber hinaus Schaltmittel (S1, S2, S3, S4, S5) umfasst, die dazu angepasst sind, die kapazitive Messanordnung in einer von zwei Phasen derart zu betreiben, dass
   - in einer Rücksetzphase der Rückkopplungskondensator (CF) entladen und die Vorspannung (Vref) aufgefrischt wird,
   - in einer Messphase eine differentielle Messreferenzspannung (Vsense) dem kapazitiven Sensor (CapS) zugeführt wird, und die Ausgangsspannung (Vout) in Abhängigkeit von einer Verstärkung des Sensorsignals (Sin) bereitgestellt wird.

11. Verfahren nach Anspruch 10, wobei das Auffrischen der Vorspannung (Vref) durch Aufladen eines Pegelverschiebungskondensators (Cbias) auf die Vorspannung (Vref) erfolgt.

12. Verfahren nach Anspruch 10 oder 11, wobei die Rücksetzphase und die Messphase abwechselnd wiederholt werden.

**Revendications**

1. Agencement de détection capacitive présentant

   - un détecteur capacitif (CapS) destiné à fournir un signal de détecteur (Sin), et
   - un circuit amplificateur de charge comprenant

      - une entrée (In) qui est connectée au détecteur capacitif (CapS),

- un amplificateur à entrée unique (A1) présentant une entrée d'amplificateur (Ina) et une sortie (Out) pour fournir une tension de sortie (Vout) comme fonction du signal de détecteur (Sin), l'amplificateur à entrée unique (A1) comprenant un amplificateur à transistors à source commune,
- des moyens (M) de fourniture d'une tension de polarisation (Vref) couplés entre l'entrée (In) et l'entrée d'amplificateur (Ina) de telle sorte que la tension de polarisation (Vref) soit soustraitée du signal de détecteur (Sin), et
- un condensateur de rétroaction (CF) couplé entre la sortie (Out) et l'entrée (In),

l'agencement comprenant en outre des moyens de commutation (S1, S2, S3, S4, S5) qui sont aptes à faire fonctionner l'agencement de détection capacitif dans une de deux phases,
sachant que dans une phase de réinitialisation le condensateur de rétroaction (CF) est déchargé et la tension de polarisation (Vref) est rafraîchie, et
sachant que dans une phase de détection une tension de référence de détection différentielle (Vsense) est fournie au détecteur capacitif (CapS), et la tension de sortie (Vout) est fournie comme fonction d'une amplification du signal de détecteur (Sin).

2. Agencement selon la revendication 1,
sachant que les moyens (M) de fourniture de la tension de polarisation (Vref) comprennent un condensateur à décalage de niveau (Cbias).

3. Agencement selon l'une quelconque des revendications 1 à 2,
comprenant en outre un condensateur supplémentaire (CF2) qui est couplé entre la sortie (Out) et l'entrée d'amplificateur (Ina) de l'amplificateur à entrée unique (A1).

4. Agencement selon l'une quelconque des revendications 1 à 3,
sachant que le détecteur capacitif (CapS) comprend une connexion série d'un premier et d'un deuxième condensateur (C1, C2),
sachant qu'une borne de détection (T) est formée par un point de connexion entre le premier et le deuxième condensateur (C1, C2) et
sachant que la borne de détection (T) est couplée à l'entrée (In) du circuit amplificateur de charge.

5. Agencement selon la revendication 4,
sachant qu'au moins un du premier et du deuxième condensateur (C1, C2) est apte à changer sa capacitance en réponse à une valeur physiquement mesurable telle qu'une accélération, une pression, une distance.

6. Agencement selon la revendication 4 ou 5,
sachant que la connexion série comporte un noeud positif (SP) et un noeud négatif (SN) pour appliquer la tension de référence de détection différentielle (Vsense).

7. Agencement selon l'une quelconque des revendications 4 à 6,
sachant que le signal de détecteur (Sin) est fourni au niveau de la borne de détection (T) comme fonction d'une différence de charge entre le premier et le deuxième condensateur (C1, C2).

8. Agencement selon l'une quelconque des revendications 4 à 7,
sachant que le détecteur capacitif (CapS) fonctionne dans une configuration de demi-pont.

9. Agencement selon l'une quelconque des revendications 1 à 8,
qui est implémenté de manière monolithique sur une puce unique.

10. Procédé de détection capacitive comprenant les étapes suivantes :

fourniture d'un agencement de détection capacitive présentant

- un détecteur capacitif (CapS) destiné à fournir un signal de détecteur (Sin), et
- un circuit amplificateur de charge comprenant

- une entrée (In) qui est connectée au détecteur capacitif (CapS),
- un amplificateur à entrée unique (A1) présentant une entrée d'amplificateur (Ina) et une sortie (Out) pour fournir une tension de sortie (Vout) comme fonction du signal de détecteur (Sin), l'amplificateur à entrée unique (A1) comprenant un amplificateur à transistors à source commune,
- des moyens (M) de fourniture d'une tension de polarisation (Vref) couplés entre l'entrée (In) et l'entrée d'amplificateur (Ina) de telle sorte que la tension de polarisation (Vref) soit soustraitée du signal de détecteur (Sin), et
- un condensateur de rétroaction (CF) couplé entre la sortie (Out) et l'entrée (In),

- l'agencement comprenant en outre des moyens de commutation (S1, S2, S3, S4, S5) qui sont aptes à faire fonctionner l'agencement de détection capacitif dans une de deux phases de sorte à
- dans une phase de réinitialisation, décharger le condensateur de rétroaction (CF) et rafraîchir la tension de polarisation (Vref),
- dans une phase de détection, fournir une tension de référence de détection différentielle (Vsense) au détecteur capacitif (CapS), et fournir la tension de sortie (Vout) comme fonction d'une amplification du signal de détecteur (Sin).

11. Procédé selon la revendication 10,
sachant que le rafraîchissement de la tension de polarisation (Vref) est réalisé en chargeant un condensateur à décalage de niveau (Cbias) à la tension de polarisation (Vref).

12. Procédé selon la revendication 10 ou 11,
sachant que la phase de réinitialisation et la phase de détection sont répétées en alternance.

Fig. 1

Fig. 2

# Fig. 3

# Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2428774 A1
- DE 19855896 A1